(19) Europäisches Patentamt
European Patent Office
Office européen des brevets

(11) **EP 3 943 529 A1**

(12) **EUROPEAN PATENT APPLICATION**
published in accordance with Art. 153(4) EPC

(43) Date of publication:
**26.01.2022 Bulletin 2022/04**

(21) Application number: **20779301.9**

(22) Date of filing: **18.03.2020**

(51) International Patent Classification (IPC):
*C08J 3/02* (2006.01)   *C08B 5/00* (2006.01)
*C08B 5/14* (2006.01)   *C08B 11/10* (2006.01)

(52) Cooperative Patent Classification (CPC):
**C08B 5/00; C08B 5/14; C08B 11/10; C08J 3/02**

(86) International application number:
**PCT/JP2020/012055**

(87) International publication number:
**WO 2020/196175 (01.10.2020 Gazette 2020/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2019 JP 2019055405**

(71) Applicant: **Toyo Seikan Group Holdings, Ltd.**
**Shinagawa-ku**
**Tokyo 141-8627 (JP)**

(72) Inventors:
• **NAGAHAMA, Hideaki**
  **Yokohama-shi, Kanagawa 240-0062 (JP)**
• **KINOSHITA, Yuuki**
  **Yokohama-shi, Kanagawa 240-0062 (JP)**

(74) Representative: **J A Kemp LLP**
**80 Turnmill Street**
**London EC1M 5QU (GB)**

(54) **NANOCELLULOSE DISPERSION LIQUID AND METHOD FOR PRODUCING SAME**

(57) The present invention relates to a nanocellulose dispersion liquid, and provides a nanocellulose dispersion liquid free from the concern of adverse effects caused by counterions, and a method for providing the dispersion liquid without undergoing any complicated process steps, where a protic polar solvent having a dielectric constant of not less than 15 and less than 80 at 25°C is used as a dispersion medium, the nanocellulose contains a sulfuric acid group and/or a sulfo group derived from a sulfuric acid treatment and an anionic functional group derived from a hydrophilization treatment, and the total amount of the sulfuric acid group, the sulfo group and the anionic functional group is 0.20 to 4 mmol/g.

**Description**

Technical Field:

The present invention relates to a nanocellulose dispersion liquid and a method for producing the same. More specifically, the present invention relates to a dispersion liquid in which a cellulose nanocrystal containing an anionic functional group is dispersed in a protic polar solvent such as an alcohol while maintaining its transparency. The present invention relates also to a method for producing the dispersion liquid.

Background Art:

It has been proposed to use nanocellulose as an advanced biomass feedstock for various applications such as functional additives and film composite materials. In particular, it is known that materials for a film made of cellulose nanofibers or a laminate containing cellulose nanofibers for instance are capable of preventing or reducing dissolution and/or a diffusion of a gas because the materials have hydrogen bonds between the cellulose fibers and strong crosslinking interactions, thereby exhibiting excellent gas-barrier properties like oxygen-barrier properties. For this reason, barrier materials comprising the cellulose nanofibers have been proposed.

In order to fibrillate cellulose fibers, a chemical treatment can be conducted in addition to a mechanical treatment. In the chemical treatment, a hydrophilic functional group such as a carboxyl group or a phosphoric acid group is introduced into a hydroxyl group of cellulose, so that energy required for the fibrillation can be reduced, and the barrier properties and dispersibility in an aqueous solvent are improved.

As described above, introduction of the hydrophilic functional group into the cellulose nanofiber can improve the dispersibility of the cellulose nanofiber in the aqueous solvent. However, the dispersibility with regard to a hydrophobic resin is still unsatisfactory.

In order to solve this problem, Patent Document 1 below proposes a cellulose nanofiber dispersion product. This dispersion product includes at least carboxyl group-containing cellulose and a dispersion medium. The carboxyl group includes an organic onium ion as a counterion. Another feature of the dispersion product is that the dispersion medium does not contain water.

Patent Document 2 below proposes a fine cellulose fiber dispersion liquid characterized in that it includes a carboxyl group-containing cellulose fiber and an organic solvent, where the carboxyl group includes an alkali ion as the counterion.

Prior art documents:

Patent Documents:

   [Patent Document 1] JP-A 2015-101694
   [Patent Document 2] JP-A 2015-196693

Summary of the invention:

Problem to be solved by the invention:

As for the cellulose nanofiber-containing dispersion liquids described in Patent Documents 1 and 2, after an oxidation treatment for hydrophilizing the cellulose nanofiber, a counterion substitution is required. Specifically, the carboxyl group-containing cellulose obtained by the oxidation is subjected to a counterion substitution using a quaternary ammonium compound or the like, but this inevitably increases the number of process steps. Other problems may be caused by elution of and/or contamination by the counterion. Further, the counterion may degrade the gas-barrier properties.

Therefore, it is an object of the present invention to provide a dispersion liquid obtained by dispersing nanocellulose in a protic polar solvent such as an alcohol, and a method applicable for producing the dispersion liquid without undergoing any complicated process steps, and the method is substantially free from adverse effects caused by counterions.

Means for Solving the Problems:

The present invention provides a nanocellulose dispersion liquid comprising nanocellulose and a protic polar solvent having a dielectric constant of not less than 15 and less than 80 at 25°C. The nanocellulose contains a sulfuric acid group and/or a sulfo group derived from a sulfuric acid treatment and an anionic functional group derived from a hydrophilization treatment, and the total amount of the sulfuric acid group, the sulfo group and the anionic functional group is 0.20 to 4 mmol/g.

It is suitable in the nanocellulose dispersion liquid of the present invention that:

1. the anionic functional group is at least one selected from the group consisting of a sulfuric acid group, a sulfo group, a phosphoric acid group and a carboxyl group;
2. the nanocellulose comprises a cellulose nanocrystal having a fiber width of not more than 50 nm, a fiber length of not more than 500 nm, and crystallinity of not less than 60%; and
3. the dispersion liquid free from precipitation or gelation comprises the nanocellulose in an amount of 1% by mass in terms of solid content, and has a transmittance of not less than 10%T for a visible light of 600 nm.

The present invention further provides a method for producing a nanocellulose dispersion liquid. The method comprises: subjecting nanocellulose to a sulfuric acid treatment; hydrophilizing the sulfuric acid-treated nanocellulose to prepare a nanocellulose aqueous dispersion liquid containing a sulfuric acid group and/or a sulfo group and an anionic functional group; and subjecting the aqueous dispersion liquid to a solvent substitution in a protic polar solvent having a dielectric constant of not less than 15 and less than 80 at 25°C.

Effect of the Invention:

The nanocellulose used in preparation of the nanocellulose dispersion liquid of the present invention is prepared by a hydrophilization treatment of cellulose nanocrystal and it has a sulfuric acid group and/or a sulfo group and an anionic functional group, and thus, the nanocellulose can be dispersed in a protic polar solvent having a dielectric constant of not less than 15 and less than 80 (e.g., an alcohol) . Unlike the conventional cellulose dispersion liquid containing counterions, the dispersion liquid of the present invention can prevent disadvantage caused by the counterions, thereby imparting excellent solvent dispersibility.

The nanocellulose dispersion liquid of the present invention has excellent transparency. More specifically, the nanocellulose dispersion liquid containing 1% by mass of nanocellulose (in terms of solid content) can be prepared to have a visible light transmittance of 10%T or more at 600 nm, without precipitation and gelation. Further, by using a protic polar solvent having a dielectric constant of not less than 15 and less than 80 as a dispersion medium of the dispersion liquid, it is also possible to have an affinity for the hydrophobic resin and to shorten the time for drying or heating in production of the product from the nanocellulose dispersion liquid.

The cellulose nanocrystal used for the nanocellulose dispersion liquid of the present invention includes a sulfuric acid group and/or a sulfo group and an anionic functional group, and it can form a dense self-assembled structure and exhibit excellent gas-barrier properties.

The method for producing a nanocellulose dispersion liquid of the present invention does not require a process step for counterion substitution so that the nanocellulose dispersion liquid having the aforementioned features can be produced with good productivity.

Mode for Carrying Out the Invention:

(Nanocellulose dispersion liquid)

The first and the important feature of the nanocellulose dispersion liquid of the present invention is that the nanocellulose containing a sulfuric acid group and/or a sulfo group derived from the sulfuric acid treatment and an anionic functional group derived from the hydrophilization treatment is dispersed in a protic polar solvent having a dielectric constant of not less than 15 and less than 80.

In the nanocellulose dispersion liquid of the present invention, the nanocellulose can be dispersed in the protic polar solvent, and it does not require a counterion substitution step. The reason is as follows. That is, the nanocellulose used in the present invention comprises cellulose nanocrystal having a sulfuric acid group and/or a sulfo group derived from a sulfuric acid treatment and an anionic functional group derived from a hydrophilization treatment. In the nanocellulose, fibers adjacent to each other form an electric dual layer due to the electric charge (anion) of the anionic functional groups such as the sulfuric acid group and/or the sulfo group and the carboxyl group present on the nanocellulose surface, and thus, a repulsive force (repulsion) is generated between the fibers. Further, since cellulose nanocrystal has a short fiber length, the fibers are separated from each other more easily in comparison with a cellulose nanofiber. As a result, the protic polar solvent can be drawn easily into the spacing between the fibers of the nanocellulose. The solvent osmotic pressure by the protic polar solvent drawn into the spacing of the fibers and the repulsion of the cellulose nanocrystal function together to enhance the isolated dispersibility of the nanocellulose, thereby providing favorable dispersibility of the nanocellulose into the protic polar solvent. Furthermore, the protic polar solvent having polarity can reduce the influence of the van der Waals force so as to effectively prevent impairment of the favorable dispersibility of the nanocellulose in the protic polar solvent.

A second important feature of the present invention is that the anionic functional groups including the sulfuric acid group, the sulfo group and the carboxyl group are present in the total amount of 0.20 to 4 mmol/, particularly 0.25 to 2.0 mmol/g, on the surface of the cellulose nanocrystal. When the amount of the anionic functional group is smaller than the range, a sufficient repulsion cannot be obtained, and dispersibility in the protic polar solvent may decrease. When the amount of the anionic functional group is larger than the range, the crystal structure of the nanocellulose cannot be maintained, and excellent performance such as gas-barrier properties of the nanocellulose may be impaired.

The cellulose nanocrystal of the present invention is a cellulose nanocrystal hydrolyzed by a sulfuric acid treatment, and thus, it contains inherently a sulfuric acid group and/or a sulfo group that contributes to formation of a self-assembled structure. In other words, some cellulose nanocrystal may be obtained through acid hydrolysis performed by subjecting the cellulose fibers to either a sulfuric acid treatment or a hydrochloric acid treatment. Since a cellulose nanocrystal obtained by the hydrochloric acid treatment does not have a sulfuric acid group and/or a sulfo group that contributes to formation of an electric dual layer, it cannot improve dispersibility in the protic polar solvent, unlike the cellulose nanocrystal provided by a sulfuric acid treatment.

The anionic functional group to be contained in the nanocellulose is selected depending on the method for a hydrophilization treatment of nanocellulose as described later. Particularly preferred examples thereof include a carboxyl group, a phosphoric acid group, and a sulfuric acid group and/or a sulfo group.

Preferably, the nanocellulose has a fiber width of not more than 50 nm, and in particular in the range of 10 to 50 nm; the fiber length is not more than 50 nm, and in particular in the range of 100 to 500 nm, so that the fibers are easily divided to impart a favorable dispersibility and to exhibit excellent gas-barrier properties.

The nanocellulose preferably has crystallinity of not less than 60%.

The nanocellulose of the present invention can contain cellulose nanocrystal having a fiber width of not more than 50 nm and an aspect ratio in the range of 5 to 50 and/or cellulose nanofibers having a fiber width of not more than 50 nm and an aspect ratio of not less than 10, as long as the aforementioned conditions are satisfied.

More specifically, the cellulose nanocrystal, which is the starting material having a fiber width of not more than 50 nm and an aspect ratio in the range of 5 to 50, can be contained as it is. Alternatively, cellulose nanofibers having a fiber width of not more than 50 nm and an aspect ratio of not less than 10 can be contained as desired.

The protic polar solvent (a polar solvent having a proton donating property) having a dielectric constant of not less than 15 and less than 80 at 25°C serves as a dispersion medium in the nanocellulose dispersion liquid of the present invention. Examples of the solvent include solvents based on alcohols such as methanol, ethanol, propanol and butanol, and further, acetone, N-methylpyrrolidone (NMP), dimethylformamide (DMF), formic acid, nitromethane, acetonitrile, dimethylsulfoxide (DMSO) and the like, though the present invention is not limited to these examples. Each of these solvents may be used alone or in combination with at least one of the other solvents, and it may be selected to be used depending on the application of the nanocellulose dispersion liquid. Among them, ethanol and 2-propanol can be suitably used. It should be noted that a dispersion medium composed of water alone is excluded from the examples because the dielectric constant of water (20°C) is 80.

(Method for producing nanocellulose dispersion liquid)

In production of the nanocellulose dispersion liquid of the present invention, a cellulose material is subjected to a sulfuric acid treatment to obtain cellulose nanocrystal containing a sulfuric acid group and/or a sulfo group, which is then subjected to a hydrophilization treatment to prepare a nanocellulose aqueous dispersion liquid containing the sulfuric acid group and/or the sulfo group together with an anionic functional group, and later the nanocellulose aqueous dispersion liquid is subjected to solvent substitution in a protic polar solvent. Before and/or after the hydrophilization treatment, the nanocellulose crystal can be subjected to a defibration treatment and a dispersion treatment, if necessary.

[Cellulose nanocrystal]

The cellulose nanocrystal used as the material of nanocellulose in the present invention comprises rod-like cellulose crystalline fibers. This cellulose nanocrystal is obtained by subjecting cellulose fibers such as pulp to an acid hydrolysis treatment using sulfuric acid or hydrochloric acid. In the present invention, cellulose nanocrystal obtained by a sulfuric acid treatment is used, because the cellulose nanocrystal treated with sulfuric acid has a sulfuric acid group and/or a sulfo group capable of contributing to formation of the self-assembled structure.

The cellulose nanocrystal preferably contains a sulfuric acid group and/or a sulfo group in an amount of 0.01 to 2.0 mmol/g, and in particular 0.01 to 0.2 mmol/g. The cellulose nanocrystal that can be suitably used may have an average fiber diameter of not more than 50 nm, particularly in the range of 2 to 50 nm; an average fiber length in the range of 100 to 500 nm; an aspect ratio in the range of 5 to 50; and crystallinity of not less than 60%, particularly not less than 70%.

The nanocellulose of the present invention is obtained by subjecting cellulose nanocrystal having a sulfuric acid group and/or a sulfo group to a hydrophilization treatment described later. Alternatively, cellulose nanofibers produced by a conventional oxidation process and having a fiber width of not more than 50 nm and an aspect ratio of not less than 10 may be contained within a range not to impair the excellent barrier properties and handleability of the nanocellulose containing anionic functional groups (including the sulfuric acid group and/or the sulfo group). Specifically, the cellulose nanofibers can be contained in an amount of less than 50% of the cellulose nanocrystal.

[Hydrophilization treatment]

In the present invention, the hydrophilization treatment of the cellulose nanocrystal having a sulfuric acid group and/or a sulfo group is conducted in order to adjust the amount of the sulfuric acid group and/or the sulfo group, or to introduce an anionic functional group such as a carboxyl group or a phosphoric acid group into a hydroxyl group at the 6-position of the cellulose, thereby preparing nanocellulose that contains an anionic functional group such as a sulfuric acid group and/or a sulfo group, a carboxyl group, or a phosphoric acid group in a total amount in the range of 0.20 to 4.0 mmol/g, and in particular 0.25 to 2.0 mmol/g. Here, the sulfuric acid group and the phosphoric acid group include sulfate and phosphate, respectively.

For the hydrophilization treatment, a never-dry process can be conducted. Alternatively, the never-dry process can be conducted in combination with a treatment using any of water-soluble carbodiimide, sulfuric acid, sulfur trioxide-pyridine complex, phosphoric-urea, a TEMPO catalyst, or an oxidant. Specifically, the hydrophilization treatment is conducted using any of carbodiimide, sulfuric acid or a sulfur trioxide-pyridine complex so as to adjust the amount of the sulfuric acid group and/or the sulfo group in the cellulose nanocrystal, and the fiber length of the nanocellulose is further shortened. A treatment using any one of the phosphoric acid-urea, the TEMPO catalyst or the oxidant serves to introduce an anionic functional group of a phosphoric acid group or a carboxyl group to adjust the total amount of the anionic functional group in the nanocellulose within the aforementioned range.

Any one of the treatments may be conducted for hydrophilization treatment as long as the total amount of the anionic functional groups is within the range. Alternatively, one of the treatments can be conducted plural times alone or in combination with any other treatment.

<Hydrophilization treatment by never-dry process>

The cellulose nanocrystal is solidified to make a powder or the like through a drying treatment such as spray drying, heating and depressurization. During the solidification by drying, a part of the anionic functional groups contained in the cellulose nanocrystal is eliminated, so that the hydrophilicity deteriorates. This indicates that a never-dry process that does not cause solidification to make the powder or the like of the cellulose nanocrystal containing the anionic functional group may be regarded as a hydrophilization treatment. Examples of the anionic functional group include a sulfuric acid group and/or a sulfo group, a phosphoric acid group, and a carboxyl group.

<Hydrophilization treatment using carbodiimide>

In the treatment using carbodiimide, cellulose nanocrystal and carbodiimide are stirred in a solvent such as dimethylformamide, and sulfuric acid is added thereto for a reaction at a temperature in a range of 0 to 80°C for 5 to 300 minutes, thereby obtaining a sulfuric ester. The carbodiimide and the sulfuric acid are preferably used in amounts of 5 to 30 mmol and 5 to 30 mmol respectively per gram of the cellulose nanocrystal (solid content).

Subsequently, an alkaline compound such as sodium hydroxide is added thereto to convert the sulfuric acid group and/or the sulfo group that has been introduced into the cellulose nanocrystal from H-form to Na-form preferably for improving the yield. Later, filtration with a dialysis membrane or the like is conducted to remove impurities and the like, thereby preparing cellulose nanocrystal with modified sulfuric acid group and/or sulfo group.

An example of the carbodiimide that can be used here is a 1-ethyl-3-(3-dimethylaminopropyl)carbodiimide, which is a water-soluble compound having a carbodiimide group (-N=C=N-) in its molecules. It is also possible to use dicyclohexylcarbodiimide or the like, which is dissolvable in an organic solvent.

<Hydrophilization treatment using sulfuric acid>

The cellulose nanocrystal used in the present invention is prepared by subjecting cellulose fibers to a hydrolysis treatment using sulfuric acid. This cellulose nanocrystal is further subjected to a hydrophilization treatment using sulfuric acid. The sulfuric acid is preferably used in an amount of 40 to 60% by mass per gram of the cellulose nanocrystal (solid content) . As a result of reaction at a temperature of 40 to 60°C for 5 to 300 minutes and the following filtration treatment using a dialysis membrane to remove impurities and the like, a sulfuric acid group and/or sulfo group-modified cellulose nanocrystal is prepared.

<Hydrophilization treatment using sulfur trioxide-pyridine complex>

In the treatment using the sulfur trioxide-pyridine complex, the cellulose nanocrystal is allowed to react with the sulfur trioxide-pyridine complex in dimethyl sulfoxide for 5 to 240 minutes at a temperature in a range of 0 to 60°C so as to introduce the sulfuric acid group and/or the sulfo group into the hydroxyl group at the 6-position of the cellulose glucose unit.
The sulfur trioxide-pyridine complex is preferably formulated in mass from 0.5 to 4 g per gram of the cellulose nanocrystal (solid content).
After the reaction, preferably an alkaline compound such as sodium hydroxide is added to convert the sulfuric acid group and/or the sulfo group that has been introduced into the cellulose nanocrystal from H-form to Na-form in order to improve the yield. Thereafter, dimethylformamide or isopropyl alcohol is added. After washing by centrifugation or the like, impurities and the like are removed by a filtration treatment using a dialysis membrane or the like, and the thus obtained concentrate is dispersed in water, whereby a sulfuric acid group and/or a sulfo group-modified cellulose nanocrystal is prepared.

<Hydrophilization treatment using phosphoric acid-urea>

The hydrophilization treatment using phosphoric acid-urea can be conducted in the same manner as in the conventionally known treatment of introducing a phosphoric acid group by use of phosphoric acid-urea. Specifically, cellulose nanocrystal is made to react with a phosphoric acid group-containing compound in the presence of a urea-containing compound for 5 to 120 minutes at a temperature in a range of 135 to 180°C, whereby the phosphoric acid group is introduced into a hydroxyl group of a cellulose glucose unit.
Examples of the phosphoric acid group-containing compound include phosphoric acid, a lithium salt of phosphoric acid, a sodium salt of phosphoric acid, a potassium salt of phosphoric acid, and an ammonium salt of phosphoric acid. Among them, sodium dihydrogen phosphate, ammonium dihydrogen phosphate, phosphoric acid or the like can be suitably used alone or as a mixture. The phosphoric acid group-containing compound is preferably added in an amount of 10 to 100 mmol relative to 10 g (solid content) of the cellulose nanocrystal.
Examples of the urea-containing compound include urea, thiourea, burette, phenylurea, benzyl urea, and dimethyl urea. Among them, urea can be suitably used. The urea-containing compound is preferably used in an amount of 150 to 200 mmol relative to 10 g (solid content) of the cellulose nanocrystal.

<Hydrophilization treatment using TEMPO catalyst>

The hydrophilization treatment using a TEMPO catalyst (2,2,6,6-tetramethylpiperidine-1-oxyl) can be conducted in the same manner as in any of conventionally known oxidation methods using a TEMPO catalyst. Specifically, in the hydrophilization reaction of a cellulose nanocrystal having a sulfuric acid group, a hydroxyl group at the 6-position of a cellulose glucose unit is oxidized to a carboxyl group via the TEMPO catalyst (2,2,6,6-tetramethylpiperidine 1-oxyl) under conditions of an aqueous system, an ordinary temperature, and an ordinary pressure.
The 2,2,6,6-tetramethylpiperidine 1-oxyl used as the TEMPO catalyst can be replaced by a derivative of TEMPO, such as 4-acetamido-TEMPO, 4-carboxy-TEMPO, or 4-phosphonoxy-TEMPO.
The use amount of TEMPO catalyst is set to a range of 0.01 to 100 mmol, preferably 0.01 to 5 mmol per gram of the cellulose nanocrystal (solid content).
In the hydrophilization-oxidation treatment, the TEMPO catalyst may be used alone or together with an oxidant or a co-oxidant such as a bromide or an iodide.
Examples of the oxidant include known oxidants such as halogen, hypohalous acid, halous acid, perhalogenic acid or salts thereof, halogen oxide and peroxide. Sodium hypochlorite or sodium hypobromite can be used particularly preferably. The amount of oxidant is set to a range of 0.5 to 500 mmol, preferably 5 to 50 mmol per gram of the cellulose nanocrystal (solid content). After a certain period of time from addition of the oxidant, an additional oxidation treatment can be conducted by incorporating a further oxidant.

As the co-oxidant, an alkali metal bromide such as sodium bromide, or an alkali metal iodide such as sodium iodide can be suitably used. The amount of co-oxidant is set to a range of 0.1 to 100 mmol, preferably 0.5 to 5 mmol per gram of the cellulose nanocrystal (solid content).

Further, it is preferable that the reaction medium of the reaction solution is water or an alcohol solvent.

The reaction temperature in the hydrophilization treatment ranges from 1 to 50°C, particularly from 10 to 50°C, and it may be room temperature. The reaction time is in a range of 1 to 360 minutes, and particularly preferably from 60 to 240 minutes.

As the reaction proceeds, carboxyl groups are formed in the cellulose, and this may lower the pH of the slurry. In order to efficiently make the oxidation reaction proceed, it is desirable to maintain the pH in the range of 9 to 12 using a pH-adjusting agent such as sodium hydroxide.

After the oxidation treatment, the catalyst and the like used in the treatment are removed by washing with water or the like.

[Defibration treatment]

As for the nanocellulose used in the present invention, it is also possible to conduct a defibration treatment after the hydrophilization treatment, though this is not mandatory because the present invention uses cellulose nanocrystal having a short fiber length as the material.

The defibration treatment can be conducted by any of conventionally-known methods, for instance, using an ultrahigh-pressure homogenizers, an ultrasound homogenizer, a grinder, a high-speed blender, a bead mill, a ball mill, a jet mill, a disassembler, a beater or a biaxial extruder.

The defibration treatment can be conducted in either dry or wet process, depending on the conditions of the nanocellulose after the hydrophilization treatment or use of the nanocellulose. Since the nanocellulose is suitably used as a dispersion liquid, it is suitable to defibrate with an ultrahigh-pressure homogenizer or the like using water or the like as a dispersion medium.

[Dispersion treatment]

The nanocellulose of the present invention is subjected to a dispersion treatment because it is used as an aqueous dispersion liquid for the solvent substitution process mentioned below.

In the dispersion treatment, a dispersing machine such as an ultrasonic disperser, a homogenizer, or a mixer can be suitably used. Alternatively, stirring with a stirring bar, a stirring stone or the like can be conducted therefor.

[Solvent substitution treatment]

The nanocellulose aqueous dispersion liquid obtained by the dispersion treatment is subjected to a solvent substitution in a protic polar solvent having a dielectric constant of not less than 15 and less than 80 at 25°C, thereby making a nanocellulose dispersion liquid of the present invention.

For the solvent substitution, the nanocellulose aqueous dispersion liquid is mixed with a protic polar solvent during or after removing the moisture of the aqueous dispersion liquid. For the moisture removal, any dehydration process using a centrifuge or a filter (filtration) is employed. After the solvent substitution treatment, the nanocellulose is dispersed in the protic polar solvent in the same manner as the dispersion treatment, whereby a nanocellulose dispersion liquid free from precipitation or gelation is prepared.

When ethanol is used as a protic polar solvent, the dispersion liquid containing 1% by mass (solid content) of the solvent-substituted nanocellulose is excellent in handleability and coating applicability because the drying time of the ethanol is shorter than that of water.

The nanocellulose dispersion liquid has excellent transparency, that is, transmittance of visible light at 600 nm is 10%T or more for a case of a dispersion liquid that contains 1% by mass of nanocellulose (solid content) and that is free from precipitation and gelation.

(Use of nanocellulose dispersion liquid)

It is possible to remove the solvent from the nanocellulose dispersion liquid of the present invention by drying and heating in a short time. Therefore, the nanocellulose dispersion liquid can be used alone to easily form a product such as a sheet or a film with a dense self-assembled structure of nanocellulose to be excellent in gas-barrier properties. In addition, since the nanocellulose dispersion liquid of the present invention has affinity also for hydrophobic resins, it can be used as a diluent or the like for a resin. Therefore, it can be provided as a mixture of any other resin so as to impart gas-barrier properties to the product as described below.

A layered inorganic compound may be blended in the nanocellulose dispersion liquid of the present invention in order to further improve the gas-barrier properties. Examples of the layered inorganic compound include kaolinite, montmorillonite, bentonite, saponite, hectorite, pidelite, stivensite, nontronite, vermiculite, halloysite, tetrasilicic mica, and hydrotalcite.

The layered inorganic compound is suitably blended in an amount of 10 to 50% by mass relative to 100% by mass of the nanocellulose in the nanocellulose dispersion liquid.

In the nanocellulose dispersion liquid of the present invention, any well-known additives can be blended together with the aforementioned layered inorganic compound. The examples include a water-soluble polymer, an antibacterial material, a filler, a colorant, an ultraviolet absorber, an antistatic agent, a water-resistant agent, a crosslinking agent, fine particles, a metal salt, colloidal silica, an alumina sol, and titanium oxide.

[Product comprising mixture with polyvalent cationic resin]

As mentioned above, the nanocellulose dispersion liquid of the present invention can form by itself a product. Alternatively, by forming a layer of the nanocellulose dispersion liquid on a layer of a polyvalent cationic resin, the nanocellulose dispersion liquid can be formed to be a product of a mixture in a mixed state to exhibit gas-barrier properties and adhesion to a substrate. Namely, it is possible to form a product comprising a mixture of the polyvalent cationic resin and the nanocellulose in a state of maintaining the aforementioned self-assembled structure of the nanocellulose. In this product, the nanocellulose and the polyvalent cationic resin are present from the vicinity of the outermost surface to the innermost surface (e.g., a substrate direction when the product is formed on a substrate made of a thermoplastic resin).

The product composed of the mixture contains the nanocellulose and the polyvalent cationic resin. When this nanocellulose is contained in an amount of 1.0 $g/m^2$ as a solid content, an oxygen permeability at 23°C 0%RH is less than 5 ($cc/m^2 \cdot day \cdot atm$), namely, the product can exhibit excellent oxygen-barrier properties. In addition to that, a product formed on the substrate is capable of remarkably improving the adhesion to the substrate layer.

The polyvalent cationic resin used in the product of the present invention is a resin containing a water-soluble or water-dispersible polyvalent cationic functional group. Examples of the polyvalent cationic resin include: water-soluble amine polymers such as polyethyleneimine, polyallylamine, polyamine polyamide-epichlorohydrin, and polyamine epichlorohydrin; polyacrylamide; poly(diallyldimethylammonium salt); dicyandiamide formalin; poly(meth)acrylate; cationized starch; cationized gum; chitin; and chitosan. Among them, a water-soluble amine polymer, particularly polyethyleneimine, can be suitably used.

The polyvalent cationic resin containing solution preferably contains the polyvalent cationic resin in an amount of 0.01 to 30% by mass, particularly 0.1 to 10% by mass, in terms of the solid content. When the amount of the polyvalent cationic resin is smaller than the range, unlike the case where the polyvalent cationic resin is within the range, the gas-barrier properties and the interfacial peeling strength cannot be improved. Even when the amount of the polyvalent cationic resin is larger than the range, the gas-barrier properties and the interfacial peeling strength cannot be further improved, and this may degrade not only the economic performance but the coating applicability and the film formability.

Examples of the solvent used in the polyvalent cationic resin-containing solution include: water; alcohols such as methanol, ethanol, and isopropanol; ketones such as 2-butanone and acetone; aromatic solvents such as toluene; and, a mixed solvent of water and any of these components.

The coating amount of the polyvalent cationic resin-containing solution is determined according to the concentration of the solution containing the polyvalent cationic resin in terms of the amount of nanocellulose (solid content) in the layer formed from the nanocellulose dispersion liquid. That is, when 1.0 $g/m^2$ of the nanocellulose (solid content) is contained as described above, the solution is preferably coated so that 0.01 to 2.0 $g/m^2$ of the polyvalent cationic resin is contained. When the amount of the polyvalent cationic resin is less than the range, it may be impossible to improve the interfacial peeling strength to the hydrophobic substrate material such as a polyester resin unlike the case where the amount is within the range. When the amount of the polyvalent cationic resin exceeds the range, the gas-barrier properties of the product may not be improved unlike the case where the amount is within the range.

Examples of coating methods include spray coating, immersion, or coating with a bar coater, a roll coater, a gravure coater or the like, though the present invention is not limited to these examples. The coated film is preferably dried under conditions at a temperature of 5 to 200°C and for 0.1 seconds to 24 hours. The drying treatment can be conducted by oven drying, infrared heating, high-frequency heating or the like. Alternatively, natural drying can be employed.

The nanocellulose dispersion liquid preferably contains the nanocellulose in an amount of 0.01 to 10% by mass, particularly 0.5 to 5.0% by mass, in terms of the solid content. When the content is less than the range, the gas-barrier properties are inferior as compared with the case where the content is within the range. When the content exceeds the range, the coating applicability and the film formability may become inferior as compared with the case where the content is in the range.

For the nanocellulose dispersion liquid, the protic polar solvent can be used alone. Alternatively, the protic polar solvent may be mixed with ketones such as 2-butanone and acetone, or aromatic solvents such as toluene.

It is preferable that the nanocellulose dispersion liquid is coated so that the content of the nanocellulose (solid content) will be 0.1 to 3.0 g/m$^2$.

The coating and drying of the nanocellulose dispersion liquid can be conducted in a manner similar to the method of coating and drying the polyvalent cationic resin-containing solution. It is preferable to dry under conditions of a temperature in a range of 5 to 200°C for 1 second to 24 hours.

It is also possible to produce a laminate including a substrate on which a product comprising a mixture of the nanocellulose and the polyvalent cationic resin is formed. This laminate can be formed by coating on a substrate of a thermoplastic resin a solution containing a polyvalent cationic resin and drying the solution, and subsequently coating and drying a nanocellulose dispersion liquid. Alternatively, the polyvalent cationic resin containing solution is coated and dried, and then, the nanocellulose dispersion liquid is coated and dried, thereby forming a cast film that can be used as a gas-barrier film.

For the substrate, conventionally-known thermoplastic resins can be used, and the examples include polyolefin, polyester, polyamide, polyvinyl alcohol, polystyrene, and acrylic resins. And examples of the product include a film, a sheet, a surface layer of a paper substrate, or a products such as a bottle, a cup, a tray, or a pouch, which is manufactured by any process such as lamination molding, extrusion molding, injection molding, blow molding, stretch blow molding, or press molding.

[Product of mixture comprising hydroxyl group-containing polymer]

It is also possible to further improve the gas-barrier properties of the nanocellulose dispersion liquid of the present invention by blending a hydroxyl group-containing polymer.

The hydroxyl group-containing polymer is a polymer having a hydroxyl group in its molecule. The examples include polyvinyl alcohol, polyvinyl pyrrolidone, polyacrylic acid, cellulose, starch, and other polysaccharides, and particularly, polyvinyl alcohol is preferably used from the viewpoint of gas-barrier properties.

In the nanocellulose dispersion liquid, the hydroxyl group-containing polymer is suitably blended so as to be 10 to 50 parts by mass (solid content) relative to 100 parts by mass of nanocellulose. Additives such as a filler, a crosslinking agent, and a colorant as described above may be also blended.

This nanocellulose-containing composition can be formed alone as a cast film. Alternatively, it can be coated and dried on a substrate of the aforementioned thermoplastic resin so as to form a product having a laminated structure.

Coating and drying of the nanocellulose-containing composition can be conducted in the same way as the coating and drying of the nanocellulose dispersion liquid as described above. It is preferable that the nanocellulose-containing composition is dried under conditions of a temperature of 5 to 200°C for 1 second to 24 hours when polyvinyl alcohol is used as the hydroxyl group-containing polymer.

Examples:

Examples of the present invention will be described below. It should be noted that these Examples are simply a part of the present invention, and the present invention is not limited to these Examples. Methods for the measurement for the respective items are described below.

<Content of anionic functional group>

A nanocellulose dispersion liquid was weighed, to which ion-exchanged water was added to prepare 100 ml of 0.05 to 0.3 mass% nanocellulose dispersion liquid. Further, 0.1 g of cation-exchange resin was added thereto and stirred. Later, filtration was conducted to separate the cation-exchange resin from the nanocellulose dispersion liquid. A 0.05 M sodium hydroxide solution was added dropwise to the cation-exchanged dispersion liquid using an automatic potentiometric titrator (manufactured by Kyoto Electronics Manufacturing Co., Ltd.) to measure the change in electrical conductivity exhibited by the nanocellulose dispersion liquid. The amount of the titrated sodium hydroxide consumed for neutralization of the anionic functional group was determined from the obtained conductivity curve, from which the content of the anionic functional group (mmol/g) was calculated using the following formula (1).

Anionic functional group content (mmol/g) = Amount of titrated sodium hydroxide (ml) consumed for neutralization of anionic functional group × Concentration of sodium hydroxide

```
(mmol/ml) / Solid mass of nanocellulose (g)            (1)
```

<Visible light transmittance>

The visible light transmittance (%T) at 600 nm for the nanocellulose dispersion liquid containing 1% by mass of nanocellulose was determined using a spectrophotometer (UV-3100PC, manufactured by Shimadzu Corporation).

<Example 1>

<Preparation of aqueous dispersion liquid of nanocellulose dispersed in water>

Cellulose nanocrystal was prepared by decomposing pulp with 64 mass% sulfuric acid, and 1 g (solid content) of the cellulose nanocrystal was dispersed in 5 ml of N,N-dimethylformamide to prepare a cellulose nanocrystal dispersion liquid. 10 mmol of 1-ethyl-3-(3-diethylaminopropyl)carbodiimide hydrochloride (manufactured by Tokyo Chemical Industry Co., Ltd.) was dissolved in another 5 ml of N,N-dimethylformamide to make a solution, and the solution was added to the cellulose nanocrystal dispersion liquid to be dispersed in 5 minutes. 10 mmol of sulfuric acid was dispersed in another 5 ml of N,N-dimethylformamide to prepare a dispersion liquid, and the liquid was introduced slowly into the cellulose nanocrystal dispersion liquid, and the cellulose nanocrystal was subjected to a hydrophilization treatment while being stirred at 0°C for 60 minutes, thereby preparing a nanocellulose dispersion liquid. After adding ion-exchanged water and sodium hydroxide solution, the nanocellulose dispersion liquid was introduced into the interior of a dialysis membrane (manufactured by Spectrum Laboratories P.L.C., fractionated molecular weight of 3500 to 5000D) and allowed to stand in ion-exchanged water to remove impurities and the like, thereby purifying the nanocellulose dispersion liquid. Ion-exchanged water was added to the purified nanocellulose dispersion liquid and the liquid was subjected to a dispersion treatment with a mixer, whereby a nanocellulose dispersion liquid containing 1% by mass of nanocellulose (solid content) dispersed in water was obtained. The anionic functional group content of the nanocellulose was 0.7 mmol/g.

<Preparation of dispersion liquid of nanocellulose dispersed in ethanol>

The aforementioned nanocellulose aqueous dispersion liquid was filtrated by applying pressure with a filter having pores of 30 nm while continuously supplying ethanol so as to substitute the solvents, thereby preparing a nanocellulose dispersion liquid containing 1% by mass (solid content) of nanocellulose dispersed in the ethanol. Here, the amount of the supplied ethanol was 10 times the amount of water. The filtration pressure was 0.2 MPa.

<Example 2>

A phosphoric acid solution was prepared by dissolving 2.4 g of urea and 1 g of ammonium dihydrogen phosphate in 3 g of ion-exchanged water. To this phosphoric acid solution, 2 g (solid content) of cellulose nanocrystal prepared by decomposing pulp with 64% by mass of sulfuric acid was added for the purpose of conducting a dispersion treatment. The cellulose nanocrystal dispersion liquid was heated to evaporate at 165°C for 15 minutes using a multiple safety dryer (manufactured by Futaba Science Co., Ltd.), so that the cellulose nanocrystal was hydrophilized. Later, 100 ml of ion-exchanged water was added to conduct a dispersion treatment, which was then washed using an ultracentrifuge (50,000 rpm, 10 minutes) . Ion-exchanged water and a sodium hydroxide solution were further added to adjust pH to 12, which was then washed to adjust pH to 8 using an ultracentrifuge (50,000 rpm, 10 minutes) while further adding ion-exchanged water. It was then introduced into the interior of a dialysis membrane (manufactured by Spectrum Laboratories P.L.C., fractionated molecular weight: 3500 to 5000D), allowed to stand in the ion-exchanged water so as to remove impurities and the like, thereby purifying the nanocellulose-containing dispersion liquid. Ion-exchanged water was added to the purified nanocellulose dispersion liquid to conduct a dispersion treatment, thereby obtaining a nanocellulose aqueous dispersion liquid containing 1% by mass of nanocellulose (solid content) dispersed in water. The anionic functional group content of the nanocellulose was 0.8 mmol/g. Thereafter, the 1 mass% nanocellulose aqueous dispersion liquid produced in the aforementioned manner was used to conduct a solvent substitution as in Example 1, thereby preparing a nanocellulose dispersion liquid containing 1% by mass (solid content) of nanocellulose dispersed in ethanol.

<Example 3>

An aqueous dispersion liquid containing 10 g of cellulose nanocrystal (solid content) was prepared by decomposing pulp with 64 mass% sulfuric acid. To this dispersion liquid, 0.8 mmol of TEMPO catalyst (manufactured by Sigma Aldrich Co., LLC) and 12.1 mmol of sodium bromide were added, to which ion-exchanged water was further added for filling a 1L volumetric flask, and the liquid was stirred to be uniformly dispersed. Later, 5 mmol of sodium hypochlorite was added to initiate an oxidation reaction. During the reaction, the pH in the system was kept in a range of 10.0 to 10.5 with 0.5 N sodium hydroxide aqueous solution, and a hydrophilization treatment was conducted while stirring at 30°C for 4 hours. The thus hydrophilized cellulose nanocrystal was washed using an ultracentrifuge (50000 rpm, 10 minutes) while adding ion-exchanged water until the pH reached 8. Thereafter, it was placed in the interior of a dialysis membrane (manufactured by Spectrum Laboratories P.L.C., fractionated molecular weight: 3500 to 5000D) and allowed to stand in ion-exchanged water to remove impurities and the like, thereby purifying the nanocellulose-containing dispersion liquid. Ion-exchanged water was added to the purified nanocellulose dispersion liquid and a dispersion treatment was conducted, whereby an aqueous nanocellulose dispersion liquid containing 1% by mass of nanocellulose (solid content) dispersed in water was obtained. The anionic functional group content of nanocellulose was 0.9 mmol/g. Thereafter, the 1 mass% nanocellulose aqueous dispersion liquid produced in the aforementioned manner was used to conduct a solvent substitution as in Example 1, thereby preparing a nanocellulose dispersion liquid containing 1% by mass (solid content) of nanocellulose dispersed in ethanol.

<Example 4>

Pulp was decomposed with 64 mass% sulfuric acid to prepare a cellulose nanocrystal. The cellulose nanocrystal was not dry-solidified but concentrated and washed (i.e., a never-dry process) in an ultracentrifuge to prepare the cellulose nanocrystal. The cellulose nanocrystal was introduced into ion-exchanged water so that the solid content of the cellulose nanocrystal would finally be 1% by mass, which was treated for 10 minutes in an ultrasonic disperser so as to obtain a nanocellulose aqueous dispersion liquid. The anionic functional group content of nanocellulose was 0.25 mmol/g. Thereafter, the 1 mass% nanocellulose aqueous dispersion liquid produced in the aforementioned manner was used to conduct a solvent substitution as in Example 1, thereby preparing a nanocellulose dispersion liquid containing 1% by mass (solid content) of nanocellulose dispersed in ethanol.

<Example 5>

Pulp was decomposed with 64 mass% sulfuric acid to prepare a cellulose nanocrystal. The cellulose nanocrystal was not dry-solidified but concentrated and washed (i.e., a never-dry process) in an ultracentrifuge to prepare the cellulose nanocrystal. The cellulose nanocrystal was introduced into ion-exchanged water so that the solid content of the cellulose nanocrystal would finally be 1% by mass, which was treated for 10 minutes in an ultrasonic disperser so as to obtain a nanocellulose aqueous dispersion liquid. The anionic functional group content in the nanocellulose was 0.25 mmol/g. Thereafter, the 1 mass% nanocellulose aqueous dispersion liquid produced in the aforementioned manner was used to conduct a solvent substitution as in Example 1 except that 2-propanol was used, thereby preparing a nanocellulose dispersion liquid containing 1% by mass (solid content) of nanocellulose dispersed in a mixed liquid composed of 50 wt% of water and 50 wt% of 2-propanol.

<Comparative Example 1>

Pulp was decomposed with 64 mass% sulfuric acid to prepare a cellulose nanocrystal. The cellulose nanocrystal (1 g in solid content) was added to ion-exchanged water and dispersed to obtain a nanocellulose aqueous dispersion liquid containing 1% by mass of nanocellulose (solid content) dispersed in water. The anionic functional group content of the nanocellulose was 0.1 mmol/g. Thereafter, the 1 mass% nanocellulose aqueous dispersion liquid produced in the aforementioned manner was used to conduct a solvent substitution as in Example 1, thereby preparing a nanocellulose dispersion liquid containing 1% by mass (solid content) of nanocellulose dispersed in ethanol.

<Comparative Example 2>

Pulp was decomposed with 36 mass% hydrochloric acid to prepare a cellulose nanocrystal. The cellulose nanocrystal (1 g in solid content) was added to ion-exchanged water and dispersed to obtain a nanocellulose aqueous dispersion liquid containing 1% by mass of nanocellulose (solid content) dispersed in water. Thereafter, the 1 mass% nanocellulose aqueous dispersion liquid produced in the aforementioned manner was used to conduct a solvent substitution as in Example 1, thereby preparing a nanocellulose dispersion liquid containing 1% by mass of nanocellulose (solid content) dispersed in ethanol.

<Comparative Example 3>

Pulp was decomposed with 36 mass% hydrochloric acid to prepare a cellulose nanocrystal. The cellulose nanocrystal (1 g in solid content) was added to ion-exchanged water and dispersed to obtain a nanocellulose aqueous dispersion liquid containing 1% by mass of nanocellulose (solid content) dispersed in water. Thereafter, the 1 mass% nanocellulose aqueous dispersion liquid produced in the aforementioned manner was used to conduct a solvent substitution as in Example 5 where 2-propanol was used, thereby preparing a nanocellulose dispersion liquid containing 1% by mass (solid content) of nanocellulose dispersed in a mixed liquid composed of 50 wt% of water and 50 wt% of 2-propanol.

[Table 1]

| | Example 1 | Example 2 | Example 3 | Example 4 | Example 5 | Comparative Example 1 | Comparative Example 2 | Comparative Example 3 |
|---|---|---|---|---|---|---|---|---|
| Material | CNC*1 | CNC*2 | CNC*1 | CNC*1 | CNC*1 | CNC*1 | CNC*2 | CNC*2 |
| Hydrophilization | Sulfation | Phosphorylation | TEMPO catalyst oxidization | Never-dry process | Never-dry process | None | None | None |
| Anionic functional group | Sulfuric acid group and/or sulfo group (sulfuric acid decomposition + hydrophilization treatment) | Sulfuric acid group and/or sulfo group + phosphoric acid group (sulfuric acid decomposition + hydrophilization treatment) | Sulfuric acid group and/or sulfo group + carboxyl group (sulfuric acid decomposition + hydrophilization treatment) | Sulfuric acid group and/or sulfo group (sulfuric acid decomposition + hydrophilization treatment) | Sulfuric acid group and/or sulfo group (sulfuric acid decomposition + hydrophilization treatment) | Sulfuric acid group and/or sulfo group (derived from sulfuric acid decomposition) | None | None |
| *A | 0.7 | 0.5 | 0.9 | 0.25 | 0.25 | 0.1 | 0 | 0 |
| *B | 56.0 | 45.0 | 85.1 | 40.5 | | 7.9 | Precipitation | |
| *C | | | | | 35.2 | | | Precipitation |

*1 Cellulose nanocrystal (derived from sulfuric acid decomposition)

*2 Cellulose nanocrystal (derived from hydrochloric acid decomposition)

*A: Anionic functional group content (mmol/g)

*B: Total light transmittance (%T) of nanocellulose dispersion liquid dispersed in ethanol

*C: Total light transmittance (%T) of nanocellulose dispersion liquid dispersed in water/IPA (water / 2-propanol = 50wt% / 50wt%)

**Claims**

1.  A nanocellulose dispersion liquid comprising nanocellulose and a protic polar solvent having a dielectric constant of not less than 15 and less than 80 at 25°C, wherein the nanocellulose contains a sulfuric acid group and/or a sulfo group derived from a sulfuric acid treatment and an anionic functional group derived from a hydrophilization treatment, and the total amount of the sulfuric acid group and/or the sulfo group and the anionic functional group is 0.20 to 4 mmol/g.

2.  The nanocellulose dispersion liquid according to claim 1, wherein the anionic functional group is at least one selected from the group consisting of a sulfuric acid group, a sulfo group, a phosphoric acid group and a carboxyl group.

3.  The nanocellulose dispersion liquid according to claim 1 or 2, wherein the nanocellulose comprises a cellulose nanocrystal having a fiber width of not more than 50 nm, a fiber length of not more than 500 nm, and crystallinity of not less than 60%.

4.  The nanocellulose dispersion liquid according to any one of claims 1 to 3, wherein the dispersion liquid free from precipitation or gelation comprises the nanocellulose in an amount of 1% by mass in terms of solid content and has a transmittance of not less than 10%T for a visible light of 600 nm.

5.  A method for producing a nanocellulose dispersion liquid, comprising: subjecting nanocellulose to a sulfuric acid treatment; hydrophilizing the nanocellulose to prepare a nanocellulose aqueous dispersion liquid containing a sulfuric acid group and/or a sulfo group and an anionic functional group; and subjecting the aqueous dispersion liquid to a solvent substitution in a protic polar solvent having a dielectric constant of not less than 15 and less than 80 at 25°C.

**INTERNATIONAL SEARCH REPORT**

| International application No. |
|---|
| PCT/JP2020/012055 |

**A.  CLASSIFICATION OF SUBJECT MATTER**
C08J  3/02(2006.01)i;  C08B  5/00(2006.01)i;  C08B  5/14(2006.01)i;  C08B 11/10(2006.01)i
FI: C08J3/02 A; C08B5/00; C08B5/14; C08B11/10
According to International Patent Classification (IPC) or to both national classification and IPC

**B.  FIELDS SEARCHED**

Minimum documentation searched (classification system followed by classification symbols)
C08J3/00-3/28, C08J99/00, C08B1/00-37/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | JP 2019-31696 A (DKS CO., LTD.) 28.02.2019 (2019-02-28) claims, paragraphs [0029]-[0030], [0045], [0050], [0065], [0067]-[0073], table 1, examples 1-6 | 1-4 |
| A | claims, paragraphs [0029]-[0030], [0045], [0050], [0065], [0067]-[0073], table 1, examples 1-6 | 5 |
| A | JP 2013-253200 A (OJI HOLDINGS CORPORATION) 19.12.2013 (2013-12-19) entire text, all drawings | 1-5 |
| A | CN 10S359017 A (SHANGHAI OCEAN UNIVERSITY) 03.08.2018 (2018-08-03) entire text, all drawings | 1-5 |

☐ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 June 2020 (08.06.2020) | 16 June 2020 (16.06.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| INTERNATIONAL SEARCH REPORT | | International application No. |
|---|---|---|
| Information on patent family members | | PCT/JP2020/012055 |

| Patent Documents referred in the Report | Publication Date | Patent Family | Publication Date |
|---|---|---|---|
| JP 2019-31696 A | 28 Feb. 2019 | (Family: none) | |
| JP 2013-253200 A | 19 Dec. 2013 | (Family: none) | |
| CN 108359017 A | 03 Aug. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015101694 A
- JP 2015196693 A